# EUROPEAN PATENT SPECIFICATION

(11) **EP 2 290 299 B1**
(45) Date of publication and mention of the grant of the patent: **20.06.2018**
(21) Application number: 08740523.9
(22) Date of filing: 16.04.2008
(51) Int. Cl.: F24F 13/14, F24F 7/08, F24F 12/00

(54) **AIR CHANNEL SWITCHING DEVICE AND HEAT EXCHANGING VENTILATING APPARATUS USING THE SAME**
LUFTKANALSCHALTVORRICHTUNG UND DIESE VERWENDENDE WÄRMEAUSTAUSCHLÜFTUNGSVORRICHTUNG
DISPOSITIF DE COMMUTATION DE CONDUITE D'AIR ET APPAREIL DE VENTILATION ÉCHANGEUR DE CHALEUR UTILISANT CELUI-CI

(43) Date of publication of application: 02.03.2011
(73) Proprietor: Mitsubishi Electric Corporation, Chiyoda-ku Tokyo 100-8310 (JP)
(72) Inventor: SHIOMI, Shinsuke, c/o GIFU KANABISHI ENGINEERING COMPANY LIMITED, Nakatsugawa-shi, Gifu 508-0041 (JP)
(74) Representative: Pfenning, Meinig & Partner mbB
(86) International application number: PCT/JP2008/057447
(87) International publication number: WO 2009/128151

(56) References cited:
- WO-A1-2007/069349
- JP-A- 3 039 860
- JP-A- 8 049 911
- JP-A- 9 133 386
- JP-A- H0 849 911
- JP-A- 2005 081 907
- JP-U- 59 172 925

## Description

### TECHNICAL FIELD

The present invention relates to an air-channel switching device that is provided in an apparatus, which has a first air-passage channel and a second air-passage channel bifurcated from the first air-passage channel, and performs, for an air-passage channel in the apparatus, switching between the first air-passage channel and the second air-passage channel, and relates to a heat exchanging and ventilating apparatus using the air-channel switching device.

### BACKGROUND ART

Recently, there has been developed a heat exchanging and ventilating apparatus that performs air conditioning by appropriately switching heat exchange ventilation, in which ventilation is performed while performing heat exchange by a heat exchange element between exterior air and interior air, and normal ventilation, in which ventilation is performed without performing heat exchange by the heat exchange element. Many of this type of heat exchanging and ventilating apparatuses have a supplied-air-passage channel for taking in exterior air and blowing it to inside via a heat exchange element, an exhaust-air-passage channel for taking in interior air and blowing it to outside via the heat exchange element, and a bypass-air-passage channel for taking in interior air and blowing it to outside, while bypassing the heat exchange element.

The bypass-air-passage channel is bifurcated from the exhaust-air-passage channel on an upstream side of the heat exchange element, and an air-channel switching device is provided in a bifurcation part. When heat exchange ventilation is performed, the air-channel switching device closes the bypass-air-passage channel and opens the exhaust-air-passage channel. Therefore, exterior air taken into the supplied-air-passage channel and interior air taken into the exhaust-air-passage channel flow through the heat exchange element, and heat exchange is performed between the exterior air and the interior air via the heat exchange element. Besides, when a normal ventilation operation is performed, the air-channel switching device closes the exhaust-air-passage channel and opens the bypass-air-passage channel, and thus interior air taken into the bypass-air-passage channel bypasses the heat exchange element and is blown to outside. Accordingly, substantially no heat exchange is performed between exterior air and interior air.

To reduce noise and improve the reliability of the heat exchanging and ventilating apparatus or to reduce its power cost, various types of air-channel switching devices have been developed. For example, Patent Document 1 discloses an air-channel switching device that includes a turnable air-channel switching plate that performs switching between air-passage channels bifurcated into two air-passage channels. When an air-channel switching is performed, the air-channel switching plate is turned halfway by a driving device, and thereafter turned to a closing position by wind pressure in the air-passage channel, thereby downsizing the driving device, and noise of the heat exchanging and ventilating apparatus is reduced as a result.

An air-channel switching device (a damper mechanism) in a heat exchanging and ventilating apparatus (an air-conditioning and ventilating apparatus) disclosed in Patent Document 2 is configured such that an air-passage channel of heat-exchanged and ventilated air and an air-passage channel of normally ventilated air pass the same air-passage channel cover, and a damper that is turned by a driving device to switch an air-channel is arranged inside the air-passage channel cover, thereby reducing the number of parts, and the reliability of the heat exchanging and ventilating apparatus is improved as a result.

Patent Document 3 discloses a heat exchanging and ventilating apparatus (a rotary heat exchanging and ventilating unit) in which a pair of damper blades is provided respectively on an exterior-air intake port side and a return-air vent side in a portion accommodating the heat exchange element, and respective damper blades in each pair are connected by a connecting rod so that when one of the damper blade is opened, the other is closed. Further, when a lower side damper blade of the pair of damper blades provided on the exterior-air intake port side is closed, an upper side damper blade of the pair of damper blades provided on the return-air vent side is opened. In this heat exchanging and ventilating apparatus, heat exchange ventilation and normal ventilation (ordinary ventilation) are switched by controlling opening and closing of the respective pairs of damper blades, so that an air supply fan and an exhaust fan are operated strongly at the time of heat exchange ventilation, and the air supply fan and the exhaust fan are operated moderately at the time of normal ventilation, thereby reducing the power cost.
Patent Document 1: Japanese Patent Application Laid-open No. 2000-337693
Patent Document 2: Japanese Patent Application Laid-open No. H5-332572
Patent Document 3: Japanese Patent Application Laid-open No. 2001-41524

Patent Document WO 2007/069349 A1 discloses a heat exchange type ventilator in which the size of a flow passage changing unit provided with a damper can be reduced. The ventilator includes a partition plate partitioning an exhaust flow passage from an intake flow passage, an exhaust damper receiver having an exhaust opening, and an intake opening. The ventilator further includes a flow passage changing unit having an intake damper receiver, an exhaust damper opening and closing the exhaust opening, and an intake damper opening and closing the intake opening. A damper side bent part is provided in the exhaust damper and the intake damper, and a receiving side bent part is provided near the end parts of the exhaust damper receiver and the intake damper receiver along the damper side bent part.

### DISCLOSURE OF INVENTION

### PROBLEM TO BE SOLVED BY THE INVENTION

The conventional air-channel switching device is attached to a partition plane between an exhaust-air-passage channel and a bypass-air-passage channel, and the exhaust-air-passage channel and the bypass-air-passage channel are opened or closed by turning one air-channel switching plate to a predetermined direction. The size of the air-channel switching plate is selected such that any of the exhaust-air-passage channel and the bypass-air-passage channel can be closed. Therefore, a closing space having a width capable of positioning the air-channel switching plate is ensured, respectively around an inflow port of the exhaust-air-passage channel and around an inflow port of the bypass-air-passage channel.

Although the heat exchange element is positioned in the exhaust-air-passage channel, the heat exchange element is not positioned in the bypass-air-passage channel. Therefore, a pressure loss in interior air flowing in the bypass-air-passage channel is considerably smaller than that in the exhaust-air-passage channel, and thus even when a sectional area of the bypass-air-passage channel is set to be smaller than that of the exhaust-air-passage channel, the same amount of blast can be obtained. Ensuring a closing space around the inflow port of the bypass-air-passage channel with the same width as the closing space to be ensured around the inflow port of the exhaust-air-passage channel can create a disincentive to downsizing of the air-channel switching device and the heat exchanging and ventilating apparatus.

Further, because switching of the air-passage channel is performed at the time of an operation of the heat exchanging and ventilating apparatus, the air-channel switching plate needs to be turned against wind pressure due to blast at the time of switching the air-channel, and thus a relatively large load is imposed on a driving device that turns the air-channel switching plate. Therefore, an air-channel switching device arranged in an air-passage channel having a large air volume and a heat exchanging and ventilating apparatus having a large air volume require a large driving device having a driving force for overcoming the wind pressure imposed as a load at the time of switching the air-channel. Upsizing of the driving device in the air-channel switching device leads to upsizing of the air-channel switching device and the heat exchanging and ventilating apparatus, and also to an increase of an installation space of the heat exchanging and ventilating apparatus. Furthermore, upsizing of the driving device hinders noise reduction in the air-channel switching device and the heat exchanging and ventilating apparatus.

The present invention has been made in view of the above circumstances, and an object of the present invention is to provide an air-channel switching device, in which downsizing and noise reduction are facilitated, and to provide a heat exchanging and ventilating apparatus using the air-channel switching device.

### MEANS FOR SOLVING PROBLEM

To achieve the above-mentioned object, an apparatus according to the present invention is provided as defined in claim 1. Preferred embodiments are defined in the dependent claims.

### EFFECT OF THE INVENTION

In the apparatus comprising an air-channel switching device according to the present invention, when the first air-passage channel is opened, the first section of the air-channel switching plate closes the second air-passage channel, and when the first air-passage channel is closed, the first section closes the region of the first air-passage channel further away from the second air-passage channel than the air-channel-switching-plate holding unit. Therefore, an area of the inflow port in the second air-passage channel can be reduced to the same level as a sectional area of the region of the first air-passage channel further away from the second air-passage channel than the air-channel-switching-plate holding unit.

Even when the sectional area of the first air-passage channel at a portion where the air-channel-switching-plate holding unit is arranged is made the same as in conventional techniques, the area of the inflow port in the second air-passage channel can be reduced. Therefore, an area of a region directly relevant to closure of the air-channel of the air-channel switching plate can be decreased more than that in conventional techniques, and wind pressure applied to the air-channel switching plate at the time of switching the air-channel can be reduced. Further, when the air-channel switching plate is turned, wind pressure applied to the first section or the third section can be used as a part of a driving force, and thus the driving mechanism can be easily configured by using a small driving device.

Therefore, according to the present invention, an apparatus comprising a small and low-noise air-channel switching device can be easily achieved. Further, in the heat exchanging and ventilating apparatus according to the present invention, because the air-channel switching device is used as an air-channel switching device that switches an exhaust-air-passage channel and a bypass-air-passage channel, a small and low-noise heat exchanging and ventilating apparatus can be easily achieved. The exhaust-air-passage channel in the heat exchanging and ventilating apparatus according to the present invention corresponds to the first air-passage channel mentioned above, and the bypass-air-passage channel corresponds to the second air-passage channel mentioned above.

### BRIEF DESCRIPTION OF DRAWINGS

FIG. 1 is a partial cutaway horizontal sectional view schematically depicting a state of heat exchange and ventilation in an example of a heat exchange and ventilating apparatus according to the present invention.
FIG. 2 is a partial cutaway horizontal sectional view schematically depicting a state of normal ventilation of the heat exchange and ventilating apparatus shown in FIG. 1.
FIG. 3-1 is a schematic perspective view of relevant parts in an air-channel switching device used in the heat exchanging and ventilating apparatus shown in FIGS. 1 and 2.
FIG. 3-2 is another schematic perspective view of the relevant parts in the air-channel switching device used in the heat exchanging and ventilating apparatus shown in FIGS. 1 and 2.
FIG. 4-1 is a schematic perspective view of an air-channel-switching-plate holding unit in the air-channel switching device used in the heat exchanging and ventilating apparatus shown in FIGS. 1 and 2.
FIG. 4-2 is a schematic perspective view of an air-channel switching plate in the air-channel switching device used in the heat exchanging and ventilating apparatus shown in FIGS. 1 and 2.
FIG. 5-1 is a partial cutaway perspective view schematically depicting an air-channel switching device when a bypass-air-passage channel in the heat exchanging and ventilating apparatus shown in FIGS. 1 and 2 is closed.
FIG. 5-2 is a partial cutaway plan view schematically depicting the air-channel switching device when the bypass-air-passage channel in the heat exchanging and ventilating apparatus shown in FIGS. 1 and 2 is closed.
FIG. 6-1 is a partial cutaway perspective view schematically depicting the air-channel switching device when the bypass-air-passage channel in the heat exchanging and ventilating apparatus shown in FIGS. 1 and 2 is opened.
FIG. 6-2 is a partial cutaway plan view schematically depicting the air-channel switching device when the bypass-air-passage channel in the heat exchanging and ventilating apparatus shown in FIGS. 1 and 2 is opened.

### EXPLANATIONS OF LETTERS OR NUMERALS

- 1a: Exterior-air suction port
- 1b: Exterior-air outlet port
- 5a: Interior-air suction port
- 5b: Interior-air outlet port
- 20: Casing
- 25: Heat exchange unit
- 30: Air supply fan
- 35: Exhaust fan
- 40: Air-channel-switching-plate holding unit
- 50: Air-channel switching plate
- 51: First section
- 52: Second section
- 53: Third section
- 53A: First portion
- 53B: Second portion
- 55: Elastic member
- 57: Driving device
- 59: Link member
- 60: Air-channel switching device
- 65: Arithmetic/control unit
- 70: Heat exchanging and ventilating apparatus
- SF: Supplied-air-passage channel
- EF: Exhaust-air-passage channel
- EF₁: First sub-air-passage channel
- EF₂: Second sub-air-passage channel
- BF: Bypass-air-passage channel
- DM: Driving mechanism

### BEST MODE(S) FOR CARRYING OUT THE INVENTION

Exemplary embodiments of an air-channel switching device and a heat exchanging and ventilating apparatus according to the present invention will be explained below in detail with reference to the accompanying drawings. The present invention is not limited to the following embodiments.

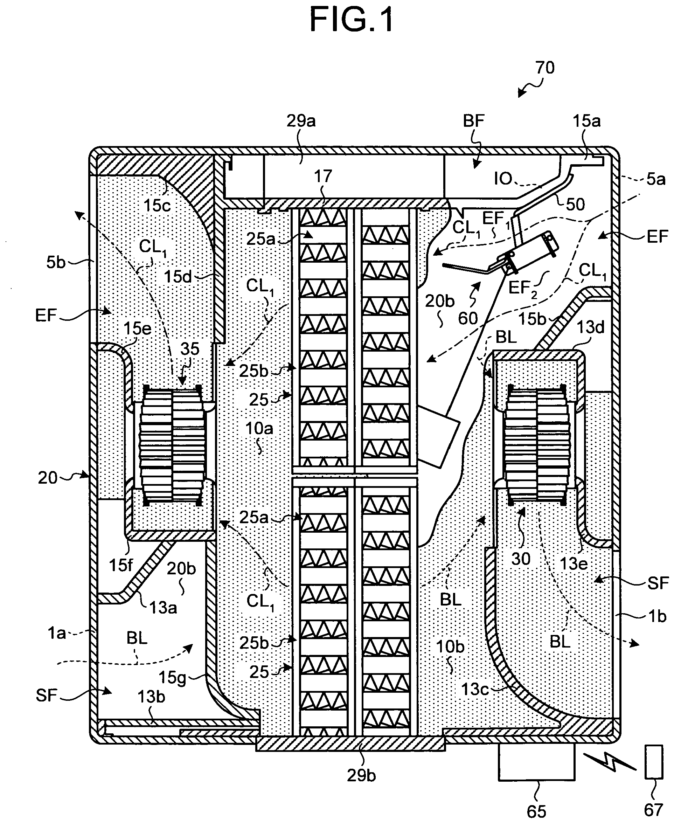

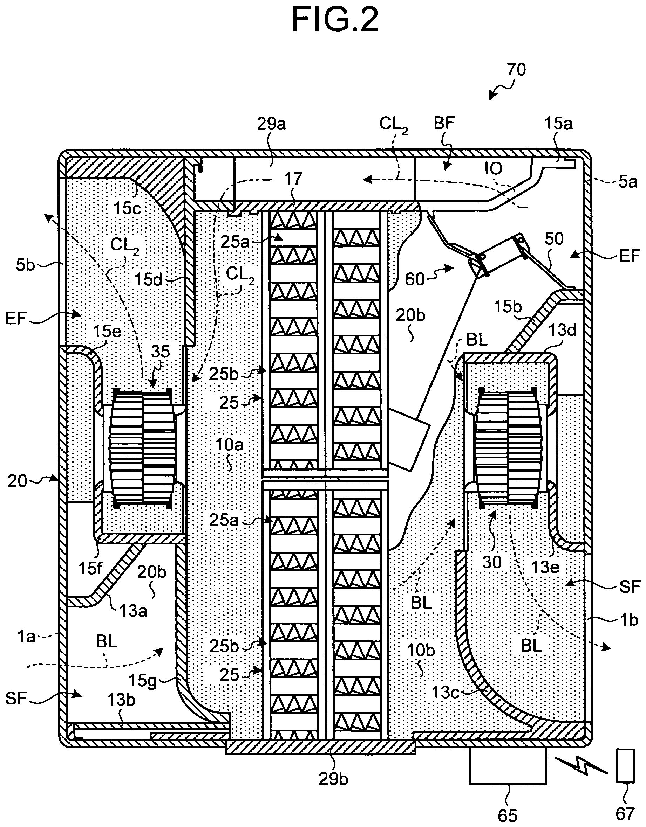

FIG. 1 is a partial cutaway horizontal sectional view schematically depicting a state of heat exchange and ventilation in an example of the heat exchange and ventilating apparatus according to the present invention. FIG. 2 is a partial cutaway horizontal sectional view schematically depicting a state of normal ventilation of the heat exchange and ventilating apparatus shown in FIG. 1.

A heat exchanging and ventilating apparatus 70 shown in FIGS. 1 and 2 includes a casing 20, two heat exchange units 25 and 25, an air supply fan 30, an exhaust fan 35, an air-channel switching device 60 included in the air-channel switching device according to the present invention, an arithmetic/control unit 65 that controls an operation of the air-channel switching device 60, and a command input unit 67 that functions as an input device of the arithmetic/control unit 65.

The casing 20 is a rectangular box, and an exterior-air suction port 1a, an exterior-air outlet port 1b, an interior-air suction port 5a, and an interior-air outlet port 5b are provided on side walls of the casing 20. Two horizontal partition walls 10a and 10b positioned in a central part of the casing 20 in a depth direction are provided in the casing 20. The horizontal partition walls 10a and 10b are separated from each other in the central part of the casing 20, where the two heat exchange units 25 and 25 are arranged in parallel.

The individual heat exchange unit 25 includes a heat exchange element 25a and a frame 25b that accommodates the heat exchange element 25a. As the heat exchange element 25a, for example, a cross-flow heat exchange element is used, in which sheet-like paper partition members and corrugated paper gap-holding members are alternately laminated, and a plurality of air flow channels are formed between the partition members and the gap-holding members therebelow and between the partition members and the gap-holding members thereabove. The respective flow channels formed below the partition members and the respective flow channels formed above the partition members are substantially orthogonal to each other as viewed in plan view, and exchange of sensible heat and exchange of latent heat are performed via the partition members between air flowing down the respective flow channels formed below the partition members and air flowing down the respective flow channels formed above the partition members.

Each of the heat exchange units 25 is arranged in the casing 20 in a state with the heat exchange element 25a being recumbent, and fixed to the casing 20 by a pair of holders 29a and 29b. In FIGS. 1 and 2, smudging is applied to the horizontal partition walls 10a and 10b so that the horizontal partition walls 10a and 10b can be easily distinguished from a bottom plate 20b of the casing 20.

The exterior-air suction port 1a and the exterior-air outlet port 1b provided in the casing 20 are arranged, separated on one side and the other side of the heat exchange unit 25 on the near side in FIGS. 1 and 2 as viewed in plan view, and the exterior-air outlet port 1b is positioned above the horizontal partition wall 10b. The exterior-air suction port 1a and the exterior-air outlet port 1b communicate with each other via the heat exchange units 25 to construct a supplied-air-passage channel SF together with the air supply fan 30 arranged on the horizontal partition wall 10b.

Two vertical partition walls 13a and 13b are arranged near the exterior-air suction port 1a on the bottom plate 20b and three vertical partition walls 13c, 13d, and 13e are arranged near the air supply fan 30 on the horizontal partition wall 10b to define the supplied-air-passage channel SF having a predetermined shape. The vertical partition walls 13c, 13d, and 13e form a casing of the air supply fan 30. Exterior air is taken into the heat exchanging and ventilating apparatus 70 from the exterior-air suction port 1a by driving the air supply fan 30 and the exterior air is blown inside via the heat exchange units 25, the air supply fan 30, and the exterior-air outlet port 1b. In FIGS. 1 and 2, the flow of exterior air in the supplied-air-passage channel SF is indicated by broken line BL.

The interior-air suction port 5a and the interior-air outlet port 5b provided in the casing 20 are arranged, separated on one side and the other side of the heat exchange unit 25 on the far side in FIGS. 1 and 2 as viewed in plan view, and the interior-air outlet port 5b is positioned above the horizontal partition wall 10a. The interior-air suction port 5a and the interior-air outlet port 5b communicate with each other via the heat exchange units 25 to construct an exhaust-air-passage channel EF together with the exhaust fan 35 arranged on the horizontal partition wall 10a, or communicate with each other, bypassing the heat exchange units 25, to construct a bypass-air-passage channel BF together with the exhaust fan 35.

Two vertical partition walls 15a and 15b are arranged near the interior-air suction port 5a on the bottom plate 20b and five vertical partition walls 15c, 15d, 15e, 15f, and 15g are arranged near the exhaust fan 35 on the horizontal partition wall 10a to define the exhaust-air-passage channel EF having a predetermined shape. The vertical partition walls 15c, 15d, 15e, 15f, and 15g form a casing of the exhaust fan 35. The vertical partition walls 15a and 15d, the vertical partition wall 17 arranged on one end of the heat exchange unit 25 on the far side in FIGS. 1 and 2, and the side wall of the casing 20 define the bypass-air-passage channel BF having a predetermined shape. The bypass-air-passage channel BF is bifurcated from the exhaust-air-passage channel EF near the interior-air suction port 5a, and an inflow port IO thereof is provided in the vertical partition wall 15a.

The exhaust-air-passage channel EF or the bypass-air-passage channel BF that takes in interior air and blow it to outside by driving the exhaust fan 35 is formed in the heat exchanging and ventilating apparatus 70. As shown in FIG. 1, when the inflow port IO of the bypass-air-passage channel BF is closed by an air-channel switching plate 50 of the air-channel switching device 60, the exhaust-air-passage channel EF is formed in the heat exchanging and ventilating apparatus 70, and interior air taken into the heat exchanging and ventilating apparatus 70 from the interior-air suction port 5a reaches the exhaust fan 35 via the heat exchange units 25 and is blown to outside from the interior-air outlet port 5b. The flow of interior air through the exhaust-air-passage channel EF is indicated by one-dot chain line CL₁ in FIG. 1.

On the other hand, as shown in FIG. 2, when the exhaust-air-passage channel EF is closed by the air-channel switching plate 50 of the air-channel switching device 60, the bypass-air-passage channel BF is formed in the heat exchanging and ventilating apparatus 70, and interior air taken into the heat exchanging and ventilating apparatus 70 from the interior-air suction port 5a bypasses the heat exchange units 25 to reach the exhaust fan 35, and is blown to outside from the interior-air outlet port 5b. The flow of interior air in the bypass-air-passage channel BF is indicated by two-dot chain line CL₂ in FIG. 2. As shown in FIG. 1, the exhaust-air-passage channel EF is locally divided into a first sub-air-passage channel EF₁ near the bypass-air-passage channel BF and a second sub-air-passage channel EF₂ far from the bypass-air-passage channel BF by the air-channel switching device 60.

The arithmetic/control unit 65 determines which of the exhaust-air-passage channel EF or the bypass-air-passage channel BF is to be formed. The arithmetic/control unit 65 determines which is appropriate to perform heat exchange and ventilation or to perform normal ventilation, based on a detection result of a temperature sensor (not shown) arranged near the outsider-air suction port 1a and a detection result of a temperature sensor (not shown) arranged near the interior-air suction port 5a, and controls an operation of the air-channel switching device 60 based on a determination result. When determining that it is appropriate to perform heat exchange and ventilation, the arithmetic/control unit 65 operates the air-channel switching device 60 to close the inflow port IO of the bypass-air-passage channel BF. When determining that it is appropriate to perform normal ventilation, the arithmetic/control unit 65 operates the air-channel switching device 60 to close the exhaust-air-passage channel EF.

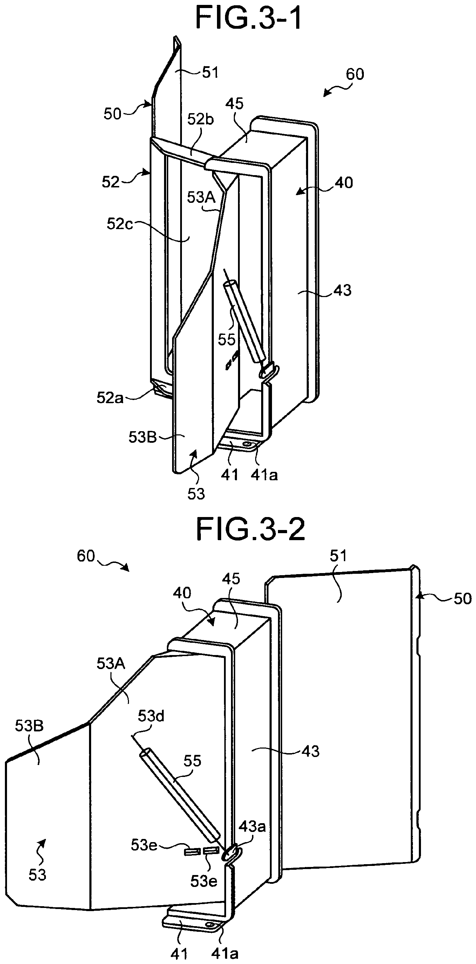

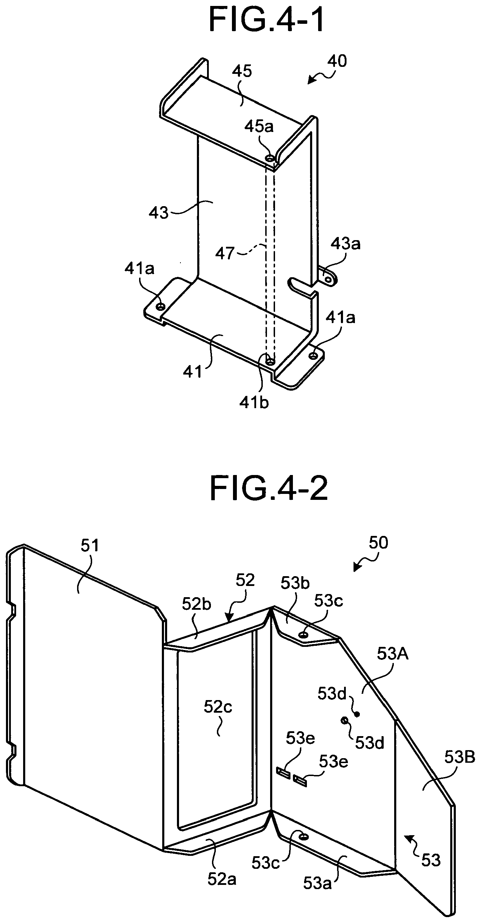

Because the heat exchanging and ventilating apparatus 70 having such a configuration has its features in the air-channel switching device 60, the air-channel switching device 60 is explained in detail with reference to FIGS. 3-1 to 4-2, while appropriately referring to reference letters or numerals used in FIG. 1 or 2.

FIG. 3-1 is a schematic perspective view of relevant parts in the air-channel switching device used in the heat exchanging and ventilating apparatus shown in FIGS. 1 and 2, and FIG. 3-2 is another schematic perspective view of the relevant parts in the air-channel switching device used in the heat exchanging and ventilating apparatus shown in FIGS. 1 and 2. FIG. 4-1 is a schematic perspective view of an air-channel-switching-plate holding unit in the air-channel switching device used in the heat exchanging and ventilating apparatus shown in FIGS. 1 and 2, and FIG. 4-2 is a schematic perspective view of the air-channel switching plate in the air-channel switching device used in the heat exchanging and ventilating apparatus shown in FIGS. 1 and 2.

As shown in FIGS. 3-1 and 3-2, the air-channel switching device 60 includes an air-channel-switching-plate holding unit 40, the air-channel switching plate 50 turnably held by the air-channel-switching-plate holding unit 40, and a driving mechanism described later, and an elastic member 55 forming the driving mechanism is shown FIGS. 3-1 and 3-2.

As shown in FIGS. 3-1, 3-2, and 4-1, the air-channel-switching-plate holding unit 40 includes a base 41 fixed to the bottom plate 20b (see FIGS. 1 and 2) of the casing 20, a back plate 43, and a top plate 45, and the base 41 and the top plate 45 are connected to the back plate 43. Through holes 41a are formed, respectively, at opposite ends of the base 41 in the longitudinal direction, into which a fixture such as a screw is inserted, and an engagement part 43a is formed in a lower side of the back plate 43, with which one end of the elastic member 55 such as a spring is connected. A through hole 41b is formed in the base 41, to which one end of a rotation shaft 47 (see FIG. 4-1) that turnably holds the air-channel-switching-plate holding unit 40 is fitted, and a through hole 45a is formed in the top plate 45, to which the other end of the rotation shaft 47 is fitted.

On the other hand, as shown in FIGS. 3-1, 3-2, and 4-2, the air-channel switching plate 50 has first to third sections 51 to 53 connected substantially in a cranked form. The first section 51 abuts against the vertical partition wall 15a to close the inflow port IO (see FIGS. 1 and 2) of the bypass-air-passage channel BF when the exhaust-air-passage channel EF is opened, and closes an inflow port of the second sub-air-passage channel EF₂ (see FIG. 1) when the exhaust-air-passage channel EF is closed.

The second section 52 has a frame shape, and is provided adjacent to the first section 51 with a predetermined angle therebetween, so that when the exhaust-air-passage channel EF is opened, the first sub-air-passage channel EF₁ is opened (see FIG. 1). Flanges 52a and 52b are provided on a lower end and an upper end of the second section 52 in the height direction, and an opening 52c in the second section 52 becomes a part of the first sub-air-passage channel EF₁ when the exhaust-air-passage channel EF is opened.

The third section 53 is provided adjacent to the second section 52 with a predetermined angle therebetween, and when the exhaust-air-passage channel EF is opened, the third section 53 is positioned on a downstream side of the air-channel-switching-plate holding unit 40, and when the exhaust-air-passage channel EF is closed, the third section 53 closes the first sub-air-passage channel EF₁ (see FIG. 1). The third section 53 includes a first portion 53A provided adjacent to the second section 52 and a second portion 53B connected to the first portion 53A.

Flanges 53a and 53b are provided on a lower end and an upper end of the first portion 53A in the height direction, and a through hole 53c is formed, respectively, in the flanges 53a and 53b, into which the rotation shaft 47 (see FIG. 4-1) is inserted. The first portion 53A is supported rotatably by the rotation shaft 47 to the air-channel-switching-plate holding unit 40. Two fitting holes 53d and 53d to which the other end of the elastic member 55 such as a spring is connected and two fitting holes 53e and 53e (see FIG. 4-2) to which one end of a link member described later is connected are formed in the first portion 53A.

On the other hand, the second portion 53B in the third section 53 is continuous to the first portion 53A with a predetermined angle therebetween, so that when the exhaust-air-passage channel EF is closed, the second portion 53B closes the first sub-air-passage channel EF₁ (see FIG. 1) together with the first portion 53A. An area of the second portion 53B is smaller than that of the first section 51.

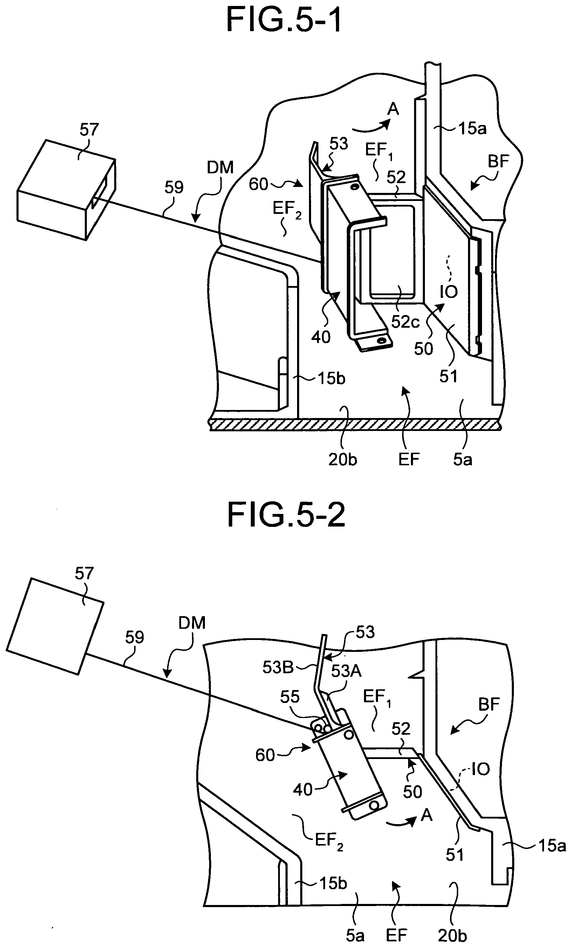

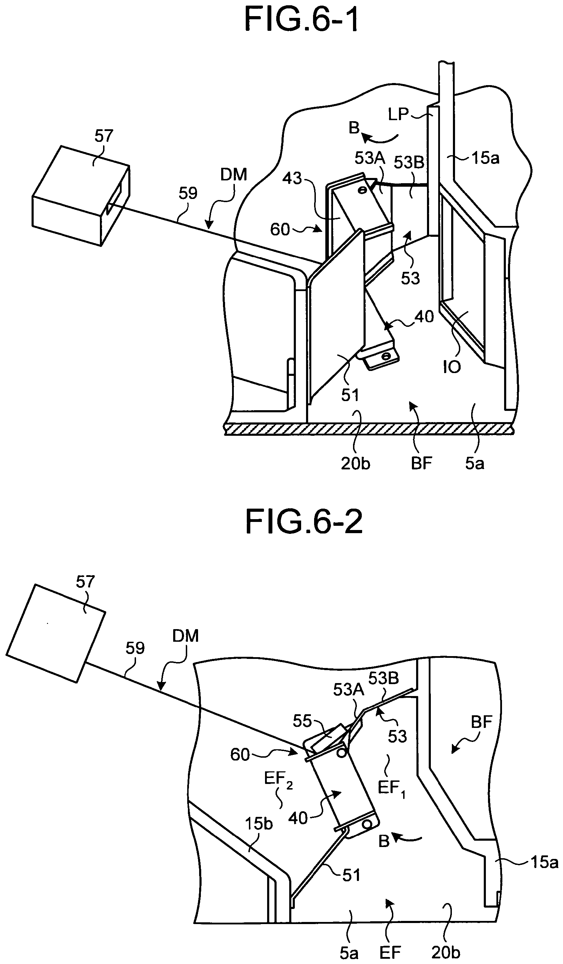

The air-channel switching device 60 including the air-channel-switching-plate holding unit 40 and the air-channel switching plate 50 operates under control of the arithmetic/control unit 65 (see FIG. 1 or 2), and turns the air-channel switching plate 50 in a predetermined direction by the driving force provided from the driving mechanism described later, thereby selecting a flow channel of interior air to either the bypass-air-passage channel BF or the exhaust-air-passage channel EF. An arrangement and an operation of the air-channel switching device 60 are described below in detail with reference to FIGS. 5-1 to 6-2.

FIG. 5-1 is a partial cutaway perspective view schematically depicting the air-channel switching device when the bypass-air-passage channel is closed, and FIG. 5-2 is a partial cutaway plan view schematically depicting the air-channel switching device when the bypass-air-passage channel is closed. FIG. 6-1 is a partial cutaway perspective view schematically depicting the air-channel switching device when the bypass-air-passage channel is opened, and FIG. 6-2 is a partial cutaway plan view schematically depicting the air-channel switching device when the bypass-air-passage channel is opened.

As shown in FIGS. 5-1 and 5-2, the air-channel-switching-plate holding unit 40 in the air-channel switching device 60 is arranged near a bifurcation of the bypass-air-passage channel BF in the exhaust-air-passage channel EF substantially along a direction of an air current in the exhaust-air-passage channel EF, specifically, on the downstream side of the bifurcation. Accordingly, the exhaust-air-passage channel EF is locally divided into the first sub-air-passage channel EF₁, which is a region close to the bypass-air-passage channel BF than the air-channel-switching-plate holding unit 40 and the second sub-air-passage channel EF₂, which is a region further away from the bypass-air-passage channel BF than the air-channel-switching-plate holding unit 40.

The air-channel switching plate 50 is turnably held by the air-channel-switching-plate holding unit 40. When the exhaust-air-passage channel EF is selected as the air-passage channel, the air-channel switching plate 50 turns in a direction of an arrow A due to the driving force of a driving mechanism DM having the elastic member 55, a driving device 57 such as a geared motor, and a link member 59 such as a connecting rod that connects the driving device 57 and the third section 53. As a result, the first section 51 closes the inflow port IO of the bypass-air-passage channel BF, the opening 52c in the second section 52 is positioned in the first sub-air-passage channel EF₁, and the third section 53 is positioned on the downstream side of the air-channel-switching-plate holding unit 40. Because interior air flowing into the first sub-air-passage channel EF₁ flows down through the opening 52c in the second section 52, the first sub-air-passage channel EF₁ is not closed.

When the exhaust-air-passage channel EF is selected, the driving device 57 is in a suspended state; however, the elastic member 55 (see FIG. 5-2) draws the third section 53 toward the air-channel-switching-plate holding unit 40 by an elastic force thereof. Therefore, the air-channel switching plate 50 turns in the direction of the arrow A. That is, even when the driving device 57 does not provide the driving force to the air-channel switching plate 50, the air-channel switching plate 50 turns in the direction of the arrow A by the elastic force of the elastic member 55.

On the other hand, as shown in FIGS. 6-1 and 6-2, when the bypass-air-passage channel BF is selected as the air-passage channel, the air-channel switching plate 50 turns in a direction of an arrow B by the driving force of the driving mechanism DM. As a result, an end of the first section 51 is brought into close contact with the vertical partition wall 15b to close the second sub-air-passage channel EF₂, the opening 52c in the second section 52 overlaps on the air-channel-switching-plate holding unit 40, and the third section 53 closes the first sub-air-passage channel EF₁.

When the bypass-air-passage channel BF is selected, the driving device 57 operates to draw the link member 59 toward the driving device 57 against the elastic force of the elastic member (see FIG. 6-2). Therefore, a tensile force is provided to the air-channel switching plate 50 from the driving device 57 via the link member 59, so that the third section 53 is drawn toward the driving device 57 to turn the air-channel switching plate 50 in the direction of the arrow B. At this time, because the opening 52c in the second section 52 (for example, see FIG. 5-1) substantially overlaps on the air-channel-switching-plate holding unit 40, a pressure loss in the first sub-air-passage channel EF₁ can be suppressed.

When the air-channel switching plate 50 is turned, wind pressure is applied, respectively, to the first section 51 and the third section 53. However, because the area of the first section 51 is larger than that of the second portion 53B in the third section 53, when the air-channel switching plate 50 turns by a certain amount in the direction of the arrow B from the vertical partition wall 15a side, the wind pressure applied on the back side of the first section 51 (a surface positioned on the inflow port IO side of the bypass-air-passage channel BF) becomes larger than that applied on the second portion 53B to naturally turn the air-channel switching plate 50 in the direction of the arrow B. Therefore, even when the driving device 57 is downsized, the air-channel switching plate 50 can be turned in the direction of the arrow B.

Although not shown, the casing 20 of the heat exchanging and ventilating apparatus 70 has a lid of a predetermined shape, and a protrusion with which an upper end of the air-channel-switching-plate holding unit 40 is brought into close contact, a protrusion with which an upper end of the first section 51 is brought into close contact from the heat exchange unit 25 side (see FIG. 1 or 2) when the bypass-air-passage channel BF is opened, and a protrusion with which an upper end of the third section 53 (excluding a region covered with the air-channel-switching-plate holding unit 40) is brought into close contact from the interior-air suction port 5a side at the time of opening the bypass-air-passage channel BF are formed on a lower face of the lid. When the bypass-air-passage channel BF is opened, the exhaust-air-passage channel EF is closed by the three protrusions formed on the lower face of the lid, the first section 51, and the third section 53.

As described above, in the air-channel switching device 60, the exhaust-air-passage channel EF is locally divided into the first sub-air-passage channel EF₁ and the second sub-air-passage channel EF₂ by the air-channel-switching-plate holding unit 40. When the exhaust-air-passage channel EF is opened, the first section 51 of the air-channel switching plate 50 closes the inflow port IO of the bypass-air-passage channel BF, and when the exhaust-air-passage channel EF is closed, the first section 51 closes the second sub-air-passage channel EF₂. Therefore, the area of the inflow port IO of the bypass-air-passage channel BF can be reduced up to the same level as the area of the second sub-air-passage channel EF₂.

Even when a sectional area of the exhaust-air-passage channel EF at a portion where the exhaust-air-passage channel EF is locally divided into the first sub-air-passage channel EF₁ and the second sub-air-passage channel EF₂ is set to the same level as in conventional techniques, because the area of the inflow port IO of the bypass-air-passage channel BF can be reduced, an area of a region directly relevant to closure of the air-channel of the air-channel switching plate 50 can be decreased, and wind pressure applied to the air-channel switching plate 50 at the time of switching the air-channel can be reduced. Further, when the air-channel switching plate 50 is turned, wind pressure applied to the first section 51 or the third section 53 can be used as a part of a driving force, and thus downsizing of the driving device 57 can be facilitated. Therefore, downsizing and noise reduction can be easily realized in the air-channel switching device 60, and downsizing and noise reduction can be easily realized also in the heat exchanging and ventilating apparatus 70 using the air-channel switching device 60.

While the air-channel switching device and the heat exchanging and ventilating apparatus according to the present invention have been explained above by exemplifying an embodiment, the present invention is not limited to the embodiment. Even when the shape of the air-channel-switching-plate holding unit in the air-channel switching device, the number of sections in the air-channel switching plate, and the shape of each of the sections are variously changed, a device having the same functions as those of the air-channel switching device explained in the embodiment can be achieved.

For example, in the air-channel switching device explained in the embodiment, the third section of the air-channel switching plate is divided into the first portion and the second portion. However, the third section can be constructed as one portion, or as three or more portions.

Configurations of other than the air-channel switching device in the heat exchanging and ventilating apparatus can be appropriately changed, as far as the bypass-air-passage channel is bifurcated from the exhaust-air-passage channel. As for each of the air-channel switching device and the heat exchanging and ventilating apparatus according to the present invention, various changes, modifications, combinations and the like can be made.

### INDUSTRIAL APPLICABILITY

The air-channel switching device according to the present invention can be applied to various devices including a first air-passage channel and a second air-passage channel bifurcated from the first air-passage channel. Further, the heat exchanging and ventilating apparatus according to the present invention can be used as a heat exchanging and ventilating apparatus for home or commercial use, which performs heat exchange ventilation and normal ventilation.

## Claims

1. An apparatus (70), which has a first air-passage channel, a second air-passage channel bifurcated from the first air-passage channel and an air-channel switching device (60) that is provided in the apparatus (70) and performs, for an air-passage channel in the apparatus, switching between the first air-passage channel and the second air-passage channel, the air-channel switching device comprising:
an air-channel-switching-plate holding unit (40) arranged near a bifurcation in the first air-passage channel substantially along a direction of an air current in the first air-passage channel;
an air-channel switching plate (50) that is turnably held by the air-channel-switching-plate holding unit (40) and has a plate-like first section (51), a frame-shaped second section (52) with an opening, and a plate-like third section (53) connected to each other in a cranked form; and
a driving mechanism that turns the air-channel switching plate (50) such that, when the first air-passage channel is selected for the air-passage channel, the first section (51) closes an inflow port of the second air-passage channel, the opening in the second section (52) is positioned in a region of the first air-passage channel, the region being on a second air-passage channel side of the air-channel-switching-plate holding unit (40), and the third section (53) is positioned on a downstream side of the air-channel-switching-plate holding unit (40), and when the second air-passage channel is selected for the air-passage channel, turns the air-channel switching plate (50) such that the first section (51) closes a region of the first air-passage channel, the region being on a side further away from the second air-passage channel than the air-channel-switching-plate holding unit (40), the opening in the second section (52) overlaps on the air-channel-switching-plate holding unit (40), and the third section (53) closes the region of the first air-passage channel, the region being on the second air-passage channel side of the air-channel-switching-plate holding unit (40).

2. The apparatus (70) according to claim 1, wherein
the driving mechanism comprises:
an elastic member (55) with one end being connected to the air-channel-switching-plate holding unit (40) and the other end being connected to the third section (53), so that when the air-channel switching plate (50) is turned in a direction of closing the first air-passage channel, the elastic member (55) biases the air-channel switching plate (50) in an opposite direction; and
a driving device that is connected to the third section (53) and applies a tensile force to the air-channel switching plate (50) at a time of selecting the second air-passage channel for the air-passage channel.

3. The apparatus (70) according to claim 1, wherein the apparatus (70) is a heat exchanging and ventilating apparatus (70) comprising a supplied-air-passage channel for taking in exterior air and blowing it to inside, a heat exchange element (25) arranged in middle of the supplied-air-passage channel, the first air-passage channel that is an exhaust-air-passage channel for taking in interior air and blowing it to outside via the heat exchange element (25), the second air-passage channel that is a bypass-air-passage channel bifurcated from the exhaust-air-passage channel for blowing interior air to outside while bypassing the heat exchange element (25), and the air-channel switching device (60) provided in the exhaust-air-passage channel to switch an air-passage channel of the interior air to the exhaust-air-passage channel and to the bypass-air-passage channel.

4. The heat exchanging and ventilating apparatus (70) according to claim 3, wherein
the driving mechanism comprises :
an elastic member (55) with one end being connected to the air-channel-switching-plate holding unit (40) and the other end being connected to the third section (53), so that when the air-channel switching plate (50) is turned in a direction of closing the exhaust-air-passage channel, the elastic member (55) biases the air-channel switching plate (50) in an opposite direction; and
a driving device that is connected to the third section (53) and applies a tensile force to the air-channel switching plate (50) at a time of selecting the bypass-air-passage channel for the air-passage channel.

## Patentansprüche

1. Vorrichtung (70), welche einen ersten Luftdurchlasskanal, einen zweiten Luftdurchlasskanal, der vom ersten Luftdurchlasskanal abgezweigt ist, und eine Luftkanalschalteinrichtung aufweist, die in der Vorrichtung (70) bereitgestellt ist und für einen Luftdurchlasskanal in der Vorrichtung Schalten zwischen dem ersten Luftdurchlasskanal und dem zweiten Luftdurchlasskanal durchführt, wobei die Luftkanalschalteinrichtung umfasst:
eine Luftkanalschaltplattenhalteeinheit (40), die in der Nähe einer Verzweigung im ersten Luftdurchlasskanal im Wesentlichen entlang einer Richtung eines Luftstroms im ersten Luftdurchlasskanal angeordnet ist;
eine Luftkanalschaltplatte (50), die durch die Luftkanalschaltplattenhalteeinheit (40) drehbar gehalten ist und einen plattenartigen ersten Abschnitt (51), einen rahmenförmigen zweiten Abschnitt (52) mit einer Öffnung und einen plattenartigen dritten Abschnitt (53), die in einer gekröpften Form miteinander verbunden sind; aufweist, und
einen Antriebsmechanismus, der die Luftkanalschaltplatte (50) so dreht, dass, wenn der erste Luftdurchlasskanal für den Luftdurchlasskanal ausgewählt wird, der erste Abschnitt (51) eine Einströmungsöffnung des zweiten Luftdurchlasskanals schließt, die Öffnung im zweiten Abschnitt (52) in einem Bereich des ersten Luftdurchlasskanals positioniert ist, wobei der Bereich auf einer zweiten Luftdurchlasskanalseite der Luftkanalschaltplattenhalteeinheit (40) ist, und der dritte Abschnitt (53) auf einer Stromabseite der Luftkanalschaltplattenhalteeinheit (40) positioniert ist, und, wenn der zweite Luftdurchlasskanal für den Luftdurchlasskanal ausgewählt wird, die Luftkanalschaltplatte (50) dreht, so dass der erste Abschnitt (51) einen Bereich des ersten Luftdurchlasskanals schließt, wobei der Bereich auf einer Seite ist, die von dem zweiten Luftdurchlasskanal weiter entfernt ist als die Luftkanalschaltplattenhalteeinheit (40), die Öffnung im zweiten Abschnitt (52) die Luftkanalschaltplattenhalteeinheit (40) überlappt und der dritte Abschnitt (53) den Bereich des ersten Luftdurchlasskanals schließt, wobei der Bereich auf der zweiten Luftdurchlasskanalseite der Luftkanalschaltplattenhalteeinheit (40) ist.

2. Vorrichtung (70) nach Anspruch 1, wobei der Antriebsmechanismus umfasst:
ein elastisches Element (55) mit einem Ende, das mit der Luftkanalschaltplattenhalteeinheit (40) verbunden ist, und wobei das andere Ende mit dem dritten Abschnitt (53) verbunden ist, so dass, wenn die Luftkanalschaltplatte (50) in einer Richtung des Schließens des ersten Luftdurchlasskanals gedreht wird, das elastische Element (55) die Luftkanalschaltplatte (50) in einer entgegengesetzten Richtung vorspannt; und
eine Antriebseinrichtung, die mit dem dritten Abschnitt (53) verbunden ist und eine Zugkraft auf die Luftkanalschaltplatte (50) ausübt zu einem Zeitpunkt des Auswählens des zweiten Luftdurchlasskanals für den Luftdurchlasskanal.

3. Vorrichtung (70) nach Anspruch 1, wobei die Vorrichtung (70) eine Wärmeaustausch- und Belüftungsvorrichtung (70) ist, umfassend einen Zufuhrluftdurchlasskanal zum Ansaugen von Außenluft und Ausblasen derselben zur Innenseite, ein Wärmeaustauschelement (25), das in der Mitte des Zufuhrluftdurchlasskanals angeordnet ist, den ersten Luftdurchlasskanal, der ein Abluftdurchlasskanal zum Ansaugen von Innenluft und Ausblasen derselben zur Außenseite über das Wärmeaustauschelement (25) ist, den zweiten Luftdurchlasskanal, der ein Bypassluftdurchlasskanal ist, der von dem Abluftdurchlasskanal abgezweigt ist, um Innenluft zur Außenseite auszublasen unter Umgehung des Wärmeaustauschelements (25), und die Luftkanalschalteinrichtung (60), die im Abluftdurchlasskanal bereitgestellt ist, um einen Luftdurchlasskanal der Innenluft auf den Abluftdurchlasskanal und auf den Bypassluftdurchlasskanal zu schalten.

4. Wärmeaustausch- und Belüftungsvorrichtung (70) nach Anspruch 3, wobei
der Antriebsmechanismus umfasst:
ein elastisches Element (55), mit einem Ende, das mit der Luftkanalschaltplattenhalteeinheit (40) verbunden ist, und wobei das andere Ende mit dem dritten Abschnitt (53) verbunden ist, so dass, wenn die Luftkanalschaltplatte (50) in eine Richtung des Schließens des Abluftdurchlasskanals gedreht wird, das elastische Element (55) die Luftkanalschaltplatte (50) in einer entgegengesetzten Richtung vorspannt; und
eine Antriebseinrichtung, die mit dem dritten Abschnitt (53) verbunden ist und eine Zugkraft auf die Luftkanalschaltplatte (50) ausübt zu einem Zeitpunkt des Auswählens des Bypassluftdurchlasskanals für den Luftdurchlasskanal.

## Revendications

1. Appareil (70), qui présente une première conduite d'air, une seconde conduite d'air qui bifurque à partir de la première conduite d'air, et un dispositif de commutation de conduite d'air (60) qui est disposé dans l'appareil (70) et qui exécute, pour une conduite d'air dans l'appareil, une commutation entre la première conduite d'air et la seconde conduite d'air, le dispositif de commutation de conduite d'air comprenant :
une unité support de plaque de commutation de conduite d'air (40) agencée à proximité d'une bifurcation dans la première conduite d'air sensiblement le long de la direction d'un courant d'air dans la première conduite d'air ;
une plaque de commutation de conduite d'air (50) qui est maintenue, de façon à pouvoir tourner, par l'unité support de plaque de commutation de conduite d'air (40), et qui présente une première section similaire une plaque (51), une deuxième section en forme de cadre (52) avec une ouverture, et une troisième section similaire une plaque (53) connectées entre elles sous une forme coudée ; et
un mécanisme d'entraînement qui tourne la plaque de commutation de conduite d'air (50) de telle sorte que, lorsque la première conduite d'air est sélectionnée en tant que conduite d'air, la première section (51) ferme un orifice d'entrée de la seconde conduite d'air, l'ouverture dans la deuxième section (52) est positionnée dans une région de la première conduite d'air, la région étant du côté de la seconde conduite d'air de l'unité support de plaque de commutation de conduite d'air (40), et la troisième section (53) est positionnée du côté aval de l'unité support de plaque de commutation de conduite d'air (40), et lorsque la seconde conduite d'air est sélectionnée en tant que conduite d'air, tourne la plaque de commutation de conduite d'air (50) de telle sorte que la première section (51) ferme une région de la première conduite d'air, la région étant d'un côté plus éloigné de la seconde conduite d'air que l'unité support de plaque de commutation de conduite d'air (40), l'ouverture dans la deuxième section (52) chevauchant l'unité support de plaque de commutation de conduite d'air (40), et la troisième section (53) ferme la région de la première conduite d'air, la région étant du côté de la seconde conduite d'air de l'unité support de plaque de commutation de conduite d'air (40).

2. Appareil (70) selon la revendication 1, dans lequel :
le mécanisme d'entraînement comprend :
un élément élastique (55) dont une extrémité est connectée à l'unité support de plaque de commutation de conduite d'air (40), et dont l'autre extrémité est connectée à la troisième section (53), de telle sorte que lorsque la plaque de commutation de conduite d'air (50) est tournée dans la direction de la fermeture de la première conduite d'air, l'élément élastique (55) sollicite la plaque de commutation de conduite d'air (50) dans la direction opposée ; et
un dispositif d'entraînement qui est connecté à la troisième section (53), et qui applique une force de tension à la plaque de commutation de conduite d'air (50) lors de la sélection de la seconde conduite d'air en tant que conduite d'air.

3. Appareil (70) selon la revendication 1, dans lequel l'appareil (70) est un appareil d'échange de chaleur et de ventilation (70) qui comprend un conduite d'approvisionnement en air qui fait rentrer l'air extérieur et qui le souffle vers l'intérieur, un élément d'échange de chaleur (25) agencé au milieu de la conduite approvisionnement en air, la première conduite d'air qui est une conduite d'air de sortie destinée à faire rentrer l'air intérieur et à le souffler vers l'extérieur par l'intermédiaire de l'élément d'échange de chaleur (25), la seconde conduite d'air qui est une conduite d'air de dérivation qui bifurque à partir de la conduite d'air de sortie, destinée à souffler l'air intérieur vers l'extérieur tout en évitant l'élément d'échange de chaleur (25), et le dispositif de commutation de conduite d'air (60) disposé dans la conduite d'air de sortie de façon à commuter une conduite d'air de l'air intérieur, vers la conduite d'air de sortie et vers la conduite d'air de dérivation.

4. Appareil d'échange de chaleur et de ventilation (70) selon la revendication 3, dans lequel :
le mécanisme d'entraînement comprend :
un élément élastique (55) dont une extrémité est connectée à l'unité support de plaque de commutation de conduite d'air (40), et dont l'autre extrémité est connectée à la troisième section (53), de telle sorte que lorsque la plaque de commutation de conduite d'air (50) est tournée dans la direction de la fermeture de la conduite d'air de sortie, l'élément élastique (55) sollicite la plaque de commutation de conduite d'air (50) dans la direction opposée ; et
un dispositif d'entraînement qui est connecté à la troisième section (53), et qui applique une force de tension à la plaque de commutation de conduite d'air (50) lors de la sélection de la conduite d'air de dérivation en tant que conduite d'air.
